Europäisches Patentamt

European Patent Office

Office européen des brevets

(19)

(11) Veröffentlichungsnummer: **0 143 739**
A2

(12)

# EUROPÄISCHE PATENTANMELDUNG

(21) Anmeldenummer: **84730114.0**

(51) Int. Cl.⁴: **G 02 B 6/42**

(22) Anmeldetag: **26.10.84**

(30) Priorität: **26.10.83 DE 3339189**

(43) Veröffentlichungstag der Anmeldung: **05.06.85**
**Patentblatt 85/23**

(84) Benannte Vertragsstaaten: **AT BE CH DE FR GB IT LI LU NL SE**

(71) Anmelder: **Heinrich-Hertz-Institut für Nachrichtentechnik Berlin GmbH, Einsteinufer 37, D-1000 Berlin 10 (DE)**

(72) Erfinder: **Bachus, Ernst-Jürgen, Dr.-Ing., Wikinger Ufer 6, D-1000 Berlin 21 (DE)**
Erfinder: **Braun, Ralf-Peter, Schillingstrasse 38, D-1000 Berlin 51 (DE)**

(74) Vertreter: **Wolff, Konrad, Heinrich-Hertz-Institut für Nachrichtentechnik Berlin GmbH Einsteinufer 37, D-1000 Berlin 10 (DE)**

(54) **Laser-Glasfaser-Kopplung und Verfahren zur Herstellung einer solchen Koppelverbindung.**

(57) Für die optische Kopplung von einem Halbleiter-Laser in eine Glasfaser werden im allgemeinen Vorrichtungen verwendet, in denen der Laser einerseits und die Faser andererseits gehaltert und aufeinander einstellbar sind. An der Übergangsstelle befindet sich Luft, gegebenenfalls eine Immersionsflüssigkeit. Erschütterungen oder andere Umwelteinflüsse führen zur Veränderungen der optischen Verhältnisse.

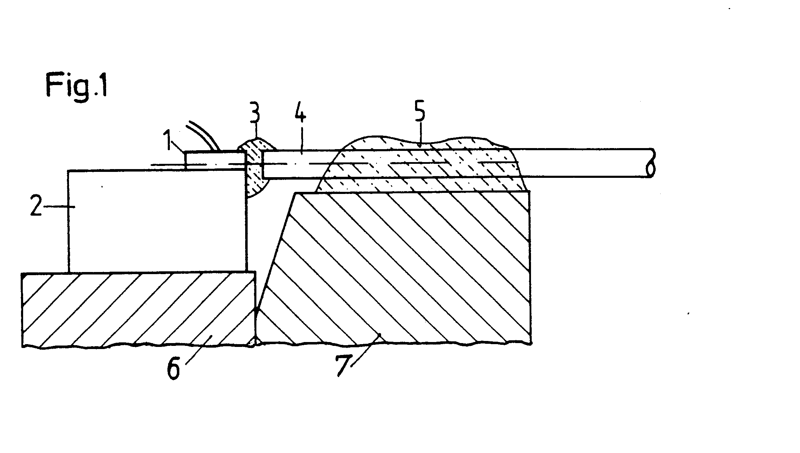

Optisch günstige Verhältnisse, insbesondere ein gleichförmiger Übergang und ein hoher Einkopplungs-Wirkungsgrad, sowie eine gegen Umwelteinflüsse unempfindliche Koppelverbindung zwischen einem Halbleiter-Laser (1) und einer polarisationserhaltenden Monomodefaser (4) werden durch eine mechanisch dauerhafte Verbindung und die Koppelstelle kapselnde, aushärtende Kunstharzmasse (3) erzielt (Fig. 1).

HEINRICH-HERTZ-INSTITUT FÜR NACHRICHTENTECHNIK BERLIN
GMBH                                          13/1083 EP

Laser-Glasfaser-Kopplung und Verfahren zur Herstellung
einer solchen Koppelverbindung

Die Erfindung bezieht sich auf eine Laser-Glasfaser-
Kopplung sowie auf ein besonders angepaßtes Verfahren
zur Herstellung einer solchen Laser-Glasfaser-Koppelverbindung.

Die Fortschritte in der Entwicklung optischer Nachrichtensysteme auf der Grundlage von Halbleiterlasern,
Glasfasern und Photodioden sind in jüngster Vergangenheit ziemlich stürmisch. Dennoch gibt es nach wie vor
Probleme, die insbesondere mit der Miniaturisierung
von Komponenten zusammenhängen.

Aus der DE-OS 23 44 585 ist beispielsweise für eine
optische Nachrichtenübertragungsvorrichtung schon seit
längerer Zeit eine Lösung für das Koppeln dielektrischer optischer Wellenleiter miteinander bzw. an Lichtquellen bekannt. Dabei handelt es sich allerdings um
Wellenleiter mit Flüssigkeitskern, so daß außer der
Funktion einer optischen Kopplung mit einer derartigen
Koppelverbindung insbesondere auch ein flüssigkeitsdichter Abschluß in Form einer sogenannten "Flaschenverschlußverbindung" sichergestellt sein muß. Eine direkte Kopplung des Lasers an einen Wellenleiter mit
Flüssigkern ist nicht sinnvoll. Gemäß diesem bekannten
Stand der Technik wird deshalb ein kurzes Ende eines
Wellenleiters mit Glasseele verwendet, das für die gewünschte Kopplung zwischen dem Laser und dem Flüssigkernwellenleiter, bei diesem auch zur Abdichtung, sorgt.

Über die Ausführung der Kopplungsstelle zwischen Laser und dem Wellenleiter mit Glaskern werden allerdings keine weiteren Angaben gemacht.

Derartige Kopplungsstellen werden inzwischen üblicherweise als lösbare Verbindungen z. B. mit Linsensystemen, getaperten Faserenden o. ähnlich ausgebildet.Jedenfalls treten dort, wie bei allen lösbaren Verbindungen, z. B. Steckkupplungen, optische Probleme beim Übergang Festkörper - Luft auf, denen häufig auch mit flüssigen Immersionsmitteln begegnet wird.

Die Erfindung zielt darauf ab, insbesondere für kohärente optische Nachrichtensysteme eine Kopplung zwischen Laser und Faser bereitzustellen, die einfach herzustellen ist, günstige optische Verhältnisse ermöglicht und vor allem die Einhaltung ihrer Eigenschaften während der gesamten Lebensdauer gewährleistet. Dies wird gemäß der Erfindung erreicht durch eine Monomodefaser und einen Halbleiterlaser, die mittels einer aushärtenden Kunstharzmasse optisch aneinander gekoppelt sowie mechanisch dauerhaft miteinander verbunden sind.

Eine derartige, starre Verbindung ist nicht nur unempfindlich gegen Erschütterungen, also gegen kurz- und langfristige Dejustierungen, sie ist auch als Kapselung der Kopplungsstelle ein wirksamer Schutz gegen andere Umwelteinflüsse. Die optischen Eigenschaften des Kunstharzes gewährleisten einen hohen Wirkungsgrad und eine konstante Leistung in der Faser. Der konstruktive Aufwand ist äußerst gering, so auch das Volumen, das für diese Verbindung benötigt wird. Für die Herstellung großer Stückzahlen, zumal wenn Laser-Bauelemente auch in der Technologie der Integrierten Optik zur Verfügung stehen, lassen sich die qualitativen Anforderungen sowie wirtschaftliche Gesichtspunkte auf diese Weise vorteilhaft vereinigen.

Bei bevorzugten Ausführungsformen der Erfindung kommt eine polarisationserhaltende Monomodefaser zum Einsatz. Diese werden beispielsweise bei optischen Übertragungssystemen mit phasenmodulierten Laser-Sendern und Heterodyn-Empfängern, in denen zur Abstimmung auf einen spezifischen Sender ein Lokal-Laser erforderlich ist, benötigt, um für die Überlagerung von zwei fundamentalen $HE_{11}$-Wellen örtliche Kohärenz, d. h. gleiche Polarisationsverhältnisse, erzeugen zu können. Das mit dem Laser gekoppelte und verbundene Faserstück führt dort z. B. an einen Richtkoppler, an dessen anderem Eingang eine Lichtwelle eintrifft, auf deren Polarisationsrichtung die Lokal-Laserwelle einzustellen ist. Die dazu erforderlichen Schwenkwinkel lassen sich durch entsprechende Verstellungen des von der Laser-Glasfaser-Kopplung entfernten Endes der polarisationserhaltenden Monomodefaser einjustieren.

Aus Gründen mechanischer Stabilität empfiehlt es sich, bei Ausführungsformen der Erfindung einen am Wärmesenkeblock des Halbleiterlasers starr befestigten Halteklotz für die Monomodefaser vorzusehen. Ein solcher Halteklotz entlastet die Laser-Faser-Verbindung und kann zudem zur Einjustierung bei der Herstellung der Koppelverbindung noch einstellbar ausgebildet sein.

Bezüglich der optischen und der mechanischen Eigenschaften ist es für Ausführungsformen zweckmäßig, ein Oligoacrylat als Kunstharzmasse zu verwenden. Die vernetzte Molekülstruktur solcher Oligoacrylate führt ohne bevorzugte Richtungen zu einer gleichmäßigen inneren Spannungsverteilung im Material, so daß sowohl die optischen als auch die mechanischen Eigenschaften keinen zufallsbedingten unterschiedlichen Einflüssen unterliegen.

Im Hinblick auf die Immersionsfunktion der Kunstharzmasse bei Ausführungsformen der Erfindung sollte deren Brechzahl etwa 3 % größer sein als die Brechzahl der Monomodefaser im Kern. Damit wird weitgehend ein rückwirkungsfreier Übergang vom Laser zur Faser gewährleistet. In der Praxis liegt die Brechzahl einer Monomodefaser bei etwa 1,5; dementsprechend folgt für die Brechzahl der Kunstharzmasse ein Wert von etwa 1,55.

Einen Begriff von den Vorzügen der Erfindung vermittelt auch das besonders angepaßte Verfahren zur Herstellung einer Laser-Glasfaser-Koppelverbindung, für das folgende Schritte erforderlich sind:

I. Einjustierung der Stirnfläche der Monomodefaser auf die vordere Abstrahlfläche des Halbleiterlasers in erster Näherung;
II. tropfenartige Zuführung der Kunstharzmasse in noch dünnflüssigem Zustand an die Kopplungsstelle;
III. Feinjustierung entsprechend Schritt I;
IV. Aushärtung der Kunstharzmasse unter UV-Licht in ca. 5 Minuten.

Die genaue Ausrichtung der zu koppelnden Komponenten ist unumgänglich und erfordert bei der Herstellung der Koppelverbindung die eigentliche Sorgfalt. Hierzu kann beispielsweise eine Justiervorrichtung benutzt werden, wie sie im Patent/Gebrauchsmuster, amtl. Aktenzeichen der Anmeldung: P 33 31 817.4 bzw. G 83 25 329.7 vorgeschlagen ist. Die endgültige und feinste Einstellung erfolgt erst, nachdem die noch flüssige Kunstharzmasse auf die Verbindungsstelle getropft worden ist. Dadurch wird z.B. auch eine unerwünschte Lunkerbildung vermieden, die sich durch Beobachtung der Kopplung vom Laser zur Faser als außergewöhnliche Beeinträchtigung der Lichtverhältnisse bemerkbar machen würde. Die Aushärtung erfolgt durch UV-Licht innerhalb von ca. 5 Minuten. Alle notwendigen Handgriffe können also an einem Arbeitsplatz durchgeführt werden, wobei der Zeitaufwand im wesentlichen auf die Justierung entfällt.

In der Zeichnung ist eine Ausführungsform der Erfindung schematisch dargestellt. Die einzige Figur zeigt den Aufbau der mechanisch dauerhaften Verbindung und optischen Kopplung zwischen einem Halbleiter-Laser 1 und einer polarisationserhaltenden Monomodefaser 4 mittels einer Kunstharzmasse 3. Der Laser 1, z. B. Hitachi HLP 1400 - Monomodelaser für $\lambda$ = 830 nm, ist fest mit seinem Wärmesenkeblock 2 verbunden und wird von einer Halterung 6 getragen. An dieser Halterung 6 ist ein Halteklotz 7, verstellbar zur Justierung, ansonsten starr befestigt. Dort liegt die Faser 4, eingebettet in eine kittartige Masse 5, beispielsweise in dieselbe Kunstharzmasse, die auch an der Verbindungsstelle zwischen Laser 1 und Faser 4 verwendet wird, großflächiger auf, wodurch die Verbindungsstelle gegen mechanische Beanspruchungen weitgehend entlastet ist.

Als Kunstharzmasse 3 hat sich ein Oligoacrylat der Fir-

0143739

ma Panacol-Elosol,Frankfurt a.M., mit der Handelsbezeichnung "Vitralit 6181" als besonders gut für Zwecke der Erfindung erwiesen.

In einem Bericht in "Electronics Letters" (Bachus, E.-J.; Braun, R.P,; Goralczyk, H.; Menow, D: "Monomode Fibre Coupler for Coherent Fibre Transmission", der voraussichtlich in Kürze erscheinen wird, ist auch die hier offenbarte Koppelverbindung enthalten.

<u>HIERZU 1 Blatt ZEICHNUNG</u>

HEINRICH-HERTZ-INSTITUT FÜR NACHRICHTENTECHNIK BERLIN
GMH                                                    13/1083 EP


Patent-/Schutz-Ansprüche


1. Laser-Glasfaser-Kopplung,
d a d u r c h   g e k e n n z e i c h n e t , daß
eine Monomodefaser ( 4 ) und ein Halbleiterlaser ( 1 )
mittels einer aushärtenden Kunstharzmasse ( 3 ) optisch
aneinander gekoppelt sowie mechanisch dauerhaft miteinander verbunden sind.


2. Laser-Glasfaser-Kopplung nach Anspruch 1,
g e k e n n z e i c h n e t   d u r c h
eine polarisationserhaltende Monomodefaser (  4 ).


3. Laser-Glasfaser-Kopplung nach Anspruch 1 oder 2,
g e k e n n z e i c h n e t   d u r c h
einen am Wärmesenkeblock ( 2 ) des Halbleiterlasers
( 1 ) starr befestigten Halteklotz ( 7 ) für die Monomodefaser ( 4 ).


4. Laser-Glasfaser-Kopplung nach einem der Ansprüche 1
bis 3,
g e k e n n z e i c h n e t   d u r c h
ein Oligoacrylat als Kunstharzmasse ( 3 ).


5. Laser-Glasfaser-Kopplung nach einem der Ansprüche 1
bis 4,
g e k e n n z e i c h n e t   d u r c h
eine Kunstharzmasse ( 3 ), deren Brechzahl etwa 3 %
größer ist als die Brechzahl der Monomodefaser ( 4 ) im
Kern.

6. Verfahren zur Herstellung einer Laser-Glasfaser-Koppelverbindung gemäß einem der Ansprüche 1 bis 5, g e k e n n z e i c h n e t   d u r c h folgende Schritte:

I. Einjustierung der Stirnfläche der Monomodefaser ( 4 ) auf die vordere Abstrahlfläche des Halbleiterlasers ( 1 ) in erster Näherung;

II. tropfenartige Zuführung der Kunstharzmasse ( 3 ) in noch dünnflüssigem Zustand an die Kopplungsstelle;

III. Feinjustierung entsprechend Schritt I;

IV. Aushärtung der Kunstharzmasse ( 3 ) unter UV-Licht in ca. 5 Minuten.

Fig.1